# EUROPEAN PATENT SPECIFICATION

(11) **EP 4 397 943 B1**
(45) Date of publication and mention of the grant of the patent: **25.11.2026**
(21) Application number: 22863911.8
(22) Date of filing: 23.03.2022
(51) Int. Cl.: G06F 3/01, G01B 11/24, A63F 13/213, G06V 20/20, G06T 7/50, G06T 7/73, G06V 40/10, A63F 13/212, A63F 13/25, A63F 13/70

(54) **INFORMATION PROCESSING DEVICE, INFORMATION PROCESSING METHOD, AND COMPUTER PROGRAM**
INFORMATIONSVERARBEITUNGSVORRICHTUNG, INFORMATIONSVERARBEITUNGSVERFAHREN UND COMPUTERPROGRAMM
DISPOSITIF DE TRAITEMENT D'INFORMATIONS, PROCÉDÉ DE TRAITEMENT D'INFORMATIONS ET PROGRAMME INFORMATIQUE

(30) Priority: 31.08.2021 JP 2021141542
(43) Date of publication of application: 10.07.2024
(73) Proprietor: Sony Group Corporation, Tokyo 108-0075 (JP)
(72) Inventor: SENO, Takashi, Tokyo 108-0075 (JP); YAMANAKA, Daiki, Tokyo 108-0075 (JP); KAWASHIMA, Manabu, Tokyo 108-0075 (JP)
(74) Representative: MFG Patentanwälte Meyer-Wildhagen Meggle-Freund Gerhard PartG mbB
(86) International application number: PCT/JP2022/013402
(87) International publication number: WO 2023/032321

(56) References cited:
- WO-A1-2018/173399
- WO-A1-2020/203831
- US-A1- 2014 139 629
- US-A1- 2018 012 370
- US-A1- 2019 043 259

## Description

### Field

The present disclosure relates to an information processing apparatus, an information processing method, and a program. Background

There is a known technology that displays an image rendered by a rendering device using augment reality (AR) or virtual reality (VR) on, for example, a head mounted display (HMD) worn by a user. An example of this technology is disclosed in Patent Literature 1 below.

Patent Literature 2 discloses a method for depth sensor aided estimation of virtual reality environment boundaries that ncludes generating depth data at a depth sensor of an electronic device based on a local environment proximate the electronic device. A set of initial boundary data is estimated based on the depth data, wherein the set of initial boundary data defines an exterior boundary of a virtual bounded floor plan. The virtual bounded floor plan is generated based at least in part on the set of initial boundary data. Additionally, a relative pose of the electronic device within the virtual bounded floor plan is determined and a collision warning is displayed on a display of the electronic device based on the relative pose.

Patent Literature 3 discloses a method for mapping an environment by an electronic device. The method includes obtaining a set of sensor measurements. The method also includes determining a set of voxel occupancy probability distributions respectively corresponding to a set of voxels based on the set of sensor measurements. Each of the voxel occupancy probability distributions represents a probability of occupancy of a voxel over a range of occupation densities. The range includes partial occupation densities.

Patent Literature 4 discloses a method comprises receiving one or more depth images from a depth camera, the depth images indicating a depth of a surface imaged by each pixel of the depth images. The method may further comprise identifying a human subject imaged by the depth images and recognizing within one or more of the depth images a beacon emitted from a control device. A position of the control device may be assessed in three dimensions, and the control device may be associated with the human subject based on a proximity of the control device to the human subject or other parameter of the control device with relation to the human subject.

### Citation List

### Patent Literature

Patent Literature 1: JP 2019-113882 A
Patent Literature 2: US 2019/043259 A1
Patent Literature 3: US 2018/012370 A1
Patent Literature 4: US 2014/139629 A1

### Summary

### Technical Problem

For example, in an AR system that superimposes content in a real environment and presents the content to a user, information regarding the real environment is acquired in order to arrange the content at an appropriate position. Furthermore, in a VR system that displays a virtual space to the user, information regarding the real environment is acquired in order to set an area (play area) safe for the user to move when the user moves in the virtual space.

The system acquires information regarding a real environment such as an obstacle from, for example, a sensor provided in a head mounted display (HMD). At this time, for example, when the sensor detects the user that appears in the camera, there is a possibility that the system erroneously detects the user as an obstacle.

When the user is erroneously detected as an obstacle, an area where content can be arranged may be limited or a play area narrower than an actual play area may be set.

Therefore, the present disclosure provides a system capable of more accurately acquiring information regarding the real environment around the user.

Note that the above problem or object is merely one of a plurality of problems or objects that can be solved or achieved by a plurality of embodiments disclosed in the present specification. Solution to Problem

According to a first aspect the present invention provides an information processing apparatus in accordance with independent claim 1. According to a second aspect the present invention provides an information processing method in accordance with independent claim 10. According to a third aspect the present invention provides a computer program in accordance with independent claim 11. Further aspects are set forth in the dependent claims, the drawings, and the following description.

### Brief Description of Drawings

FIG. 1 is a diagram illustrating an outline of an information processing system according to the present disclosure.
FIG. 2 is a diagram illustrating a setting example of a play area.
FIG. 3 is a diagram illustrating an example of erroneous detection of a user.
FIG. 4 is a diagram illustrating an outline of an information processing method by the information processing system according to the present disclosure.
FIG. 5 is a block diagram illustrating a configuration example of a terminal device according to an embodiment of the present disclosure.
FIG. 6 is a block diagram illustrating a configuration example of an information processing apparatus according to the embodiment of the present disclosure.
FIG. 7 is a diagram illustrating an example of a depth map acquired by an estimation processing unit according to the embodiment of the present disclosure.
FIG. 8 is a diagram illustrating an example of a range-finding area in a depth map of a terminal device according to the embodiment of the present disclosure.
FIG. 9 is a diagram illustrating appearance of a user according to the embodiment of the present disclosure.
FIG. 10 is a diagram illustrating a length of a person region according to the embodiment of the present disclosure.
FIG. 11 is a diagram illustrating a length of the person region according to the embodiment of the present disclosure.
FIG. 12 is a diagram illustrating a width of the person region according to the embodiment of the present disclosure.
FIG. 13 is a diagram illustrating the width of the person region according to the embodiment of the present disclosure.
FIG. 14 is an example of a person region reliability value table according to the embodiment of the present disclosure.
FIG. 15 is a diagram illustrating an example of the person region according to the embodiment of the present disclosure.
FIG. 16 is a diagram illustrating an example of the person region according to the embodiment of the present disclosure.
FIG. 17 is a diagram illustrating an example of information processing according to the embodiment of the present disclosure.
FIG. 18 is a diagram illustrating an example of an occupancy map generation process according to the embodiment of the present disclosure.
FIG. 19 is a diagram illustrating a posture of a user according to a first modification of the embodiment of the present disclosure.
FIG. 20 is a diagram illustrating an example of correction of a person region according to the first modification of the embodiment of the present disclosure.
FIG. 21 is a diagram illustrating an example of an occupancy map generation process according to the first modification of the embodiment of the present disclosure.
FIG. 22 is a diagram illustrating a posture of a user according to a second modification of the embodiment of the present disclosure.
FIG. 23 is a diagram illustrating a person region according to a third modification of the embodiment of the present disclosure.
FIG. 24 is a diagram illustrating an example of detection of a person region according to a third modification of the embodiment of the present disclosure.
FIG. 25 is a diagram illustrating an example of detection of the person region according to the third modification of the embodiment of the present disclosure.
FIG. 26 is a diagram illustrating an example of an occupancy map generation process according to the third modification of the embodiment of the present disclosure.
FIG. 27 is a diagram illustrating an example of an environment occupancy map according to a fourth modification of the embodiment of the present disclosure.
FIG. 28 is a diagram illustrating an example of a person region occupancy map according to the fourth modification of the embodiment of the present disclosure.
FIG. 29 is a diagram illustrating an example of an occupancy map according to the fourth modification of the embodiment of the present disclosure.
FIG. 30 is a diagram illustrating an example of an occupancy map generation process according to the fourth modification of the embodiment of the present disclosure.
FIG. 31 is a diagram illustrating a plane area according to a fifth modification of the embodiment of the present disclosure.
FIG. 32 is a diagram illustrating an example of a plane detection map according to the fifth modification of the embodiment of the present disclosure.
FIG. 33 is a diagram illustrating an example of an occupancy map generation process according to the fifth modification of the embodiment of the present disclosure.
FIG. 34 is a flowchart illustrating an example of a flow of a plane estimation process according to the fifth modification of the embodiment of the present disclosure.
FIG. 35 is a hardware configuration diagram illustrating an example of a computer that implements functions of the information processing apparatus according to the embodiment of the present disclosure.

### Description of Embodiments

Hereinafter, an embodiment of the present disclosure will be described in detail with reference to the accompanying drawings. Note that, in the present specification and the drawings, components having substantially the same functional configuration are denoted by the same reference signs to omit redundant description.

Furthermore, in the present specification and the drawings, specific values may be indicated and described, but the values are merely examples, and other values may be applied. In addition, in the present specification, the following references may be used in the description.

### (References)

[1] Armin Hornung, et al. "OctoMap: An efficient probabilistic 3D mapping framework based on octrees." Autonomous robots 34.3 (2013): 189-206.
[2] Andrija Gajic, et al. "Egocentric Human Segmentation for Mixed Reality", arXiv 2020
[3] Ruwen Schnabel, et al. "Efficient RANSAC for point-cloud shape detection." Computer graphics forum. Vol. 26. No. 2. Oxford, UK: Blackwell Publishing Ltd, 2007
[4] Denis Tome, et al. "xR-EgoPose: Egocentric 3D Human Pose from an HMD Camera", International Conference on Computer Vision (ICCV) 2019
[5] Bugra Tekin, et al. "Structured Prediction of 3D Human Pose with Deep Neural Networks"
[6] https://en.wikipedia.org/wiki/K-means_clustering

In the description below, one or more embodiments (including examples and modifications) may be implemented independently. On the other hand, at least some of the plurality of embodiments described below may be appropriately combined with at least some of other embodiments. The plurality of embodiments may include novel features different from each other. Therefore, the plurality of embodiments may contribute to solving different objects or problems, and may exhibit different effects.

### <<1. Introduction>>

### <1.1. Outline of information processing system 1>

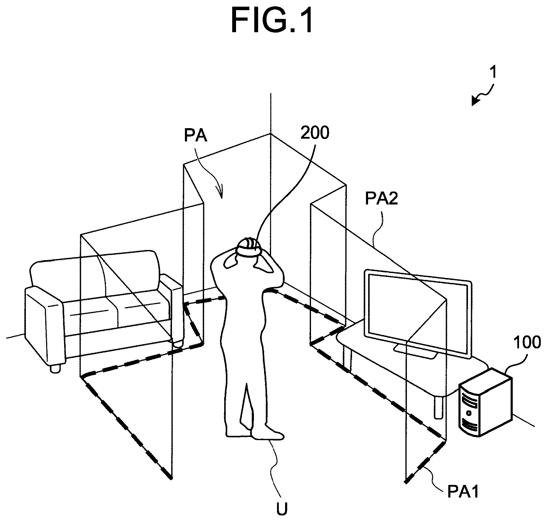

FIG. 1 is a diagram illustrating an outline of an information processing system 1 according to the present disclosure. As illustrated in FIG. 1, the information processing system 1 includes an information processing apparatus 100 and a terminal device 200.

The information processing apparatus 100 and the terminal device 200 can communicate with each other via various wired or wireless networks. Note that, as a communication system used in the network, any system can be applied regardless of wired or wireless (e.g., WiFi (registered trademark) and Bluetooth (registered trademark)).

Furthermore, the number of the information processing apparatuses 100 and the number of the terminal devices 200 included in the information processing system 1 are not limited to the number illustrated in FIG. 1, and may be more. Furthermore, FIG. 1 illustrates a case where the information processing system 1 individually includes the information processing apparatus 100 and the terminal device 200, but the present disclosure is not limited thereto. For example, the information processing apparatus 100 and the terminal device 200 may be realized as one apparatus. For example, functions of both the information processing apparatus 100 and the terminal device 200 can be realized by one apparatus such as a standalone HMD.

The terminal device 200 is, for example, a wearable device (eyewear device) such as an eyeglass HMD worn on the head by a user U.

Note that the eyewear device applicable as the terminal device 200 may be a so-called see-through type head mounted display (augmented reality (AR) glasses) that transmits an image of the real space, or may be a goggle type (virtual reality (VR) goggles) that does not transmit an image of the real space.

Furthermore, in the present disclosure, the terminal device 200 is not limited to the HMD, and may be, for example, a tablet, a smartphone, or the like held by the user U.

The information processing apparatus 100 integrally controls the operation of the terminal device 200. The information processing apparatus 100 is realized, for example, by a processing circuit such as a central processing unit (CPU) or a graphics processing unit (GPU). Note that a detailed configuration of the information processing apparatus 100 according to the present disclosure will be described later.

### <1.2. Problem>

Here, in recent years, many devices that perform processing according to movement of the user U have appeared. For example, there is a game in which a character displayed on a screen is moved in synchronization with user's movement.

When the user always performs operation as in this game, the user becomes too immersed in the operation to notice the surrounding environment. As a result, a problem that the user collides with a surrounding object (obstacle) may occur. In particular, in VR in which the user plays while wearing the HMD, the user may not be able to confirm the surrounding environment at all. Thus, there is a higher risk of colliding with a real object.

Therefore, in order to ensure physical safety of the user U, the information processing apparatus 100 controls the HMD to identify a safe play area (allowable area) that does not come into contact with a real object, so that the user U moves in the safe play area.

For example, in FIG. 1, an area PA is specified as the play area where the user U can move or stretch his/her hand without hitting an obstacle. The play area may be represented as a three-dimensional region such as a combination of a dotted line PA1 illustrated on a floor and a wall PA2 vertically extending from the dotted line PA1. Alternatively, the play area may be represented as a two-dimensional area of the dotted line PA1. In this way, the play area can be set as the two-dimensional area or the three-dimensional area.

In a conventional information processing system, it is difficult to automatically set the play area according to the actual surrounding environment without an input by the user U. Therefore, in the conventional information processing system, the play area is often manually set by the user U.

For example, the user U designates the play area by drawing a boundary line using a device (not illustrated) such as a game controller. Alternatively, the information processing system detects a position of the user U and sets a predetermined range within a radius of several meters around the user U as the play area.

When the user U designates the play area, a labor of the user U increases. For example, it takes longer time until the user can start the game. Furthermore, when the conventional information processing system sets a predetermined range as the play area according to the position of the user U, an obstacle is included in the predetermined range, and the user U may collide with the obstacle. Furthermore, in this case, even when there is an area with no obstacle outside the predetermined range, the conventional information processing system cannot set the area as the play area, and a movable range of the user U may be narrowed.

Accordingly, it is expected to set a more appropriate play area while reducing the labor of the user U.

Therefore, for example, it is assumed an information processing system that generates information on a three-dimensional space of the surrounding environment of the user U (environment information) and sets the play area. Here, the environment information expresses an object present in the three-dimensional space with a plurality of planes or voxels (grids). Examples of the environment information are an occupancy grid map and a 3D mesh.

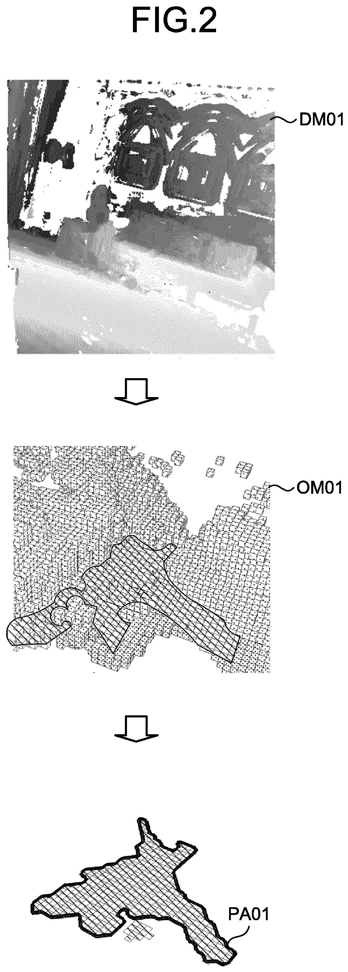

FIG. 2 is a diagram illustrating a setting example of the play area. As illustrated in an upper diagram of FIG. 2, the information processing system acquires distance information DM01 of an object in the surrounding environment from, for example, a distance measuring device provided in an HMD worn by the user U. Note that the distance information DM01 illustrated in an upper diagram of FIG. 2 is a depth map representing a distance from the distance measuring device to the object.

As illustrated in a middle diagram of FIG. 2, the information processing system generates environment information OM01 based on the distance information DM01. Here, the information processing system generates an occupancy grid map (hereinafter also referred to as an occupancy map) as the environment information OM01.

An outline of the occupancy map will be described. The occupancy map is a known technology for 3D expression of the environment. In the occupancy map, the surrounding environment is expressed as a plurality of voxels arranged in a 3D grid in a three-dimensional space. Each of the plurality of voxels indicates occupancy/non-occupancy of the object by holding one of the following three states.
· Occupied: A voxel is occupied by an object (occupied state).
· Free: A voxel is not occupied by an object and is empty space (unoccupied state).
· Unknown: It is not possible to determine whether a voxel is occupied by an object due to insufficient observation (unobserved state).

A method for generating the occupancy map is disclosed in, for example, Reference [1]. For example, the information processing system estimates a presence probability of the object for each voxel from time-series distance measurement information (distance information DM01 described above), and determines the state of each voxel.

Next, the information processing system sets the play area using the environment information OM01 generated. As illustrated in a lower diagram of FIG. 2, the information processing system 1 detects a floor plane from the environment information OM01 and sets the floor plane in a play area PA01.

In this manner, the information processing system can set the play area PA01 in which the user U can safely move by acquiring the environment information OM01 around the user U.

Note that the information processing system can use the environment information OM01 for purposes other than the setting of the play area PA01. For example, the information processing system can use the environment information OM01 to set a movement route and a presentation position of an AI character (content) to be presented to the user U. Similarly to the user U, the information processing system moves the AI character while avoiding an obstacle. Therefore, the information processing system uses the environment information OM01 for calculating a movement path of the AI character.

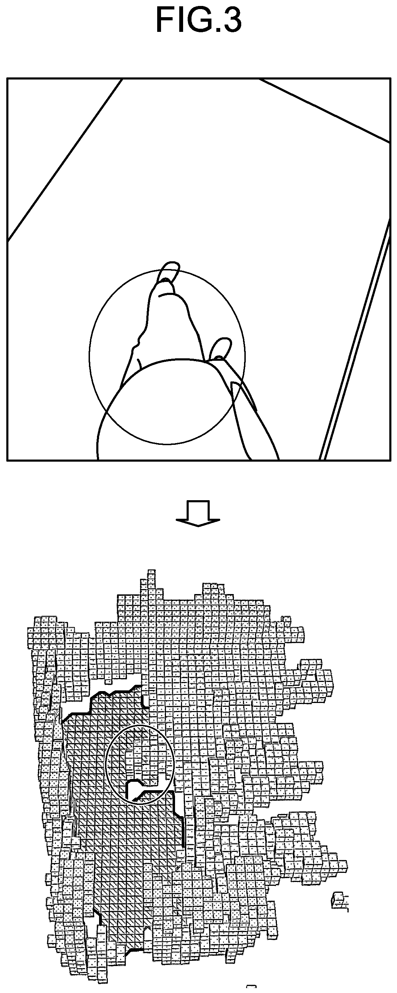

Here, there is a possibility that the user U is included in the distance information acquired by the information processing system. For example, as illustrated in an upper diagram of FIG. 3, when the user U faces downward, a foot of the user U may appear in a ranging range of the distance measuring device (portion circled in the upper diagram of FIG. 3). In this case, as illustrated in a lower diagram of FIG. 3, the information processing system generates the environment information with the user U as an object (obstacle). For example, in the lower diagram of FIG. 3, a circled portion is a portion in which the information processing system erroneously detects the user U as an obstacle. Note that FIG. 3 is a diagram illustrating an example of erroneous detection of the user U.

In this case, the information processing system sets a plane not including the user U as the play area. When the information processing system detects the user U as an obstacle as described above, an accuracy of the environment information decreases, and there is a possibility that the play area cannot be set properly.

### <1.3. Outline>

Therefore, the information processing system 1 according to the present disclosure estimates a person region including the user U in the distance information based on a posture of the user U. The information processing system 1 updates the environment information around the user U based on the estimated person region and the distance information.

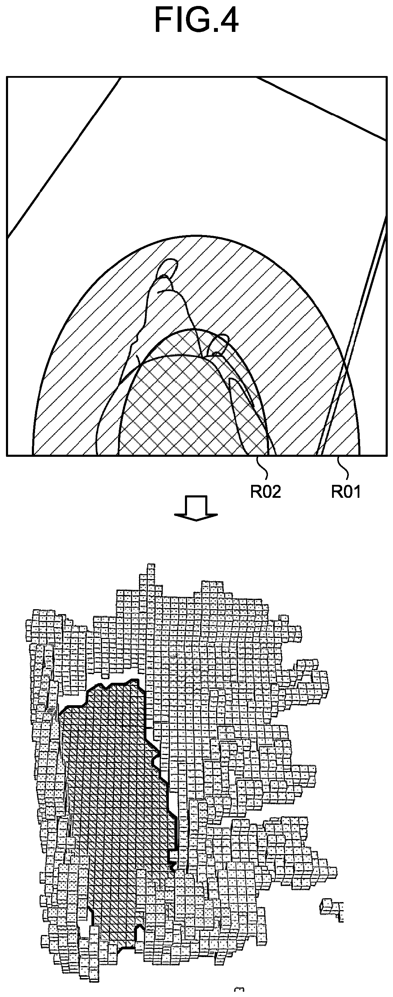

FIG. 4 is a diagram illustrating an outline of an information processing method by the information processing system 1 according to the present disclosure.

As illustrated in an upper diagram of FIG. 4, the information processing system 1 estimates the person region including the user U in the distance information. For example, the information processing system 1 sets the person region according to a face direction of the user U. At this time, the information processing system 1 can set a plurality of person regions R01 and R02 according to a distance from the user U, in other words, a distance from an HMD 200.

The information processing system 1 sets a person region reliability value with respect to the distance information included in the person regions R01 and R02. For example, when the distance information is a depth map, the information processing system 1 assigns the person region reliability value to pixels included in the person regions R01 and R02. The person region reliability value is, for example, a value indicating that the distance information is a person (user U). A larger person region reliability value increases a possibility that the distance information is a distance to the user U.

For example, the information processing system 1 sets a different person region reliability value to each of the regions R01 and R02. The information processing system 1 sets the person region reliability value such that the person region reliability value of the region R02 closer to the user U, in other words, the HMD 200, is larger than the person region reliability value of the region R01. Details of the setting of the person region reliability value will be described later.

The information processing system 1 generates or updates the environment information according to the set person region reliability value. Specifically, the information processing system 1 updates the environment information such that the distance information (pixels of the depth map) having a larger person region reliability value is not reflected in the environment information (voxels of the occupancy map). For example, when the person region reliability value is "1", in other words, when a voxel corresponding to a pixel having the highest possibility of being a person will be updated, the information processing system 1 performs the update without using the pixel value (distance measurement value). Details of the update of the environment information using the person region reliability value will be described later.

In this way, by generating or updating the environment information according to the person region reliability value, the information processing system 1 can further reduce erroneous detection of the user U. Therefore, as illustrated in a lower diagram of FIG. 4, the information processing system 1 can generate the environment information in which an influence of the user U is further reduced.

### <<2. Embodiment>>

### <2.1. Configuration example of terminal device>

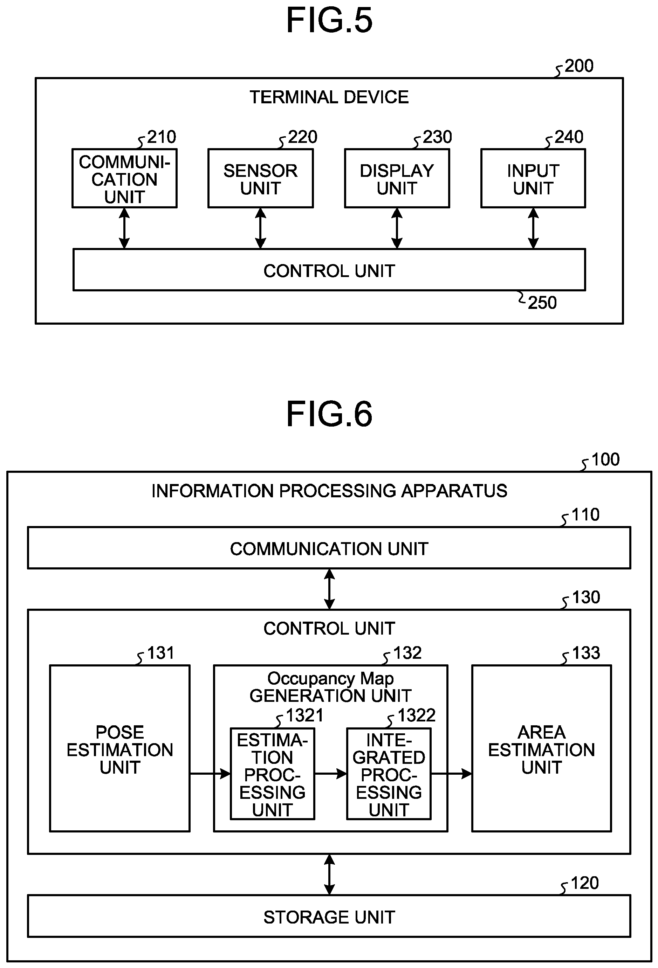

FIG. 5 is a block diagram illustrating a configuration example of the terminal device 200 according to the embodiment of the present disclosure. As illustrated in FIG. 5, the terminal device 200 includes a communication unit 210, a sensor unit 220, a display unit 230, an input unit 240, and a control unit 250.

### [Communication unit 210]

The communication unit 210 transmits and receives information to and from another device. For example, the communication unit 210 transmits a video reproduction request and a sensing result of the sensor unit 220 to the information processing apparatus 100 according to the control by the control unit 250. Furthermore, the communication unit 210 receives a video to be reproduced from the information processing apparatus 100.

### [Sensor unit 220]

The sensor unit 220 may include, for example, a camera (image sensor), a depth sensor, a microphone, an acceleration sensor, a gyroscope, a geomagnetic sensor, and a global positioning system (GPS) receiver. Furthermore, the sensor unit 220 may include a speed sensor, an acceleration sensor, an angular velocity sensor (gyro sensor), and an inertial measurement unit (IMU) that integrates the speed sensor, the acceleration sensor, and the angular velocity sensor.

For example, the sensor unit 220 senses a position of the terminal device 200 in the real space (or position of the user U who uses the terminal device 200), orientation and attitude of the terminal device 200, and acceleration. Furthermore, the sensor unit 220 senses depth information around the terminal device 200. Note that, when the sensor unit 220 includes a distance measuring device that senses the depth information, the distance measuring device may be a stereo camera, or a time of flight (ToF) distance image sensor.

### [Display unit 230]

The display unit 230 displays an image according to the control by the control unit 250. For example, the display unit 230 may include a right-eye display unit and a left-eye display unit (not illustrated). In this case, the right-eye display unit projects an image using at least a partial region of a right-eye lens (not illustrated) included in the terminal device 200 as a projection surface. The left-eye display unit projects an image using at least a partial region of a left-eye lens (not illustrated) included in the terminal device 200 as the projection surface.

Alternatively, when the terminal device 200 has a goggle-type lens, the display unit 230 may project a video using at least a partial region of the goggle-type lens as the projection surface. Note that the left eye lens and the right eye lens (or goggle-type lens) may be formed of, for example, a transparent material such as resin or glass.

Alternatively, the display unit 230 may be configured as a non-transmissive display device. For example, the display unit 230 may include a liquid crystal display (LCD) or an organic light emitting diode (OLED). Note that, in this case, an image in front of the user U captured by the sensor unit 220 (camera) may be sequentially displayed on the display unit 230. As a result, the user U can visually recognize a scenery in front of the user U through the video displayed on the display unit 230.

### [Input unit 240]

The input unit 240 may include a touch panel, a button, a lever, a switch, and the like. The input unit 240 receives various inputs by the user U. For example, when the AI character is arranged in the virtual space, the input unit 240 may receive an input by the user U for changing an arrangement position of the AI character.

### [Control unit 250]

The control unit 250 integrally controls the operation of the terminal device 200 using, for example, a CPU, a graphics processing unit (GPU), and a RAM built in the terminal device 200. For example, the control unit 250 causes the display unit 230 to display a video received from the information processing apparatus 100.

As an example, the terminal device 200 receives a video. In this case, the control unit 250 causes the display unit 230 to display a video portion, in the video, corresponding to the information on the position and attitude of the terminal device 200 (or user U, etc.) sensed by the sensor unit 220.

Furthermore, when the display unit 230 includes the right-eye display unit and the left-eye display unit (not illustrated), the control unit 250 generates a right-eye image and a left-eye image based on the video received from the information processing apparatus 100. Then, the control unit 250 displays the right-eye image on the right-eye display unit and displays the left-eye image on the left-eye display unit. As a result, the display unit 230 can cause the user U to view a stereoscopic video.

Furthermore, the control unit 250 may perform various recognition processes based on a sensing result of the sensor unit 220. For example, the control unit 250 may recognize, based on the sensing result, motion (e.g., user U's gesture and movement) by the user U wearing the terminal device 200.

### <2.2. Configuration example of information processing apparatus>

FIG. 6 is a block diagram illustrating a configuration example of the information processing apparatus 100 according to the embodiment of the present disclosure. As illustrated in FIG. 6, the information processing apparatus 100 includes a communication unit 110, a storage unit 120, and a control unit 130.

### [Communication unit 110]

The communication unit 110 transmits and receives information to and from another device. For example, the communication unit 110 transmits a video to be reproduced to the information processing apparatus 100 according to the control by the control unit 130. Furthermore, the communication unit 110 receives a video reproduction request and a sensing result from the terminal device 200.

### [Storage unit 120]

The storage unit 120 is realized by, for example, a semiconductor memory element such as a random access memory (RAM), a read only memory (ROM), or a flash memory, or a storage device such as a hard disk or an optical disk.

### [Control unit 130]

The control unit 130 integrally controls the operation of the information processing apparatus 100 using, for example, a CPU, a graphics processing unit (GPU), and a RAM, provided in the information processing apparatus 100. For example, the control unit 130 is implemented by a processor executing various programs stored in the storage device inside the information processing apparatus 100 using a random access memory (RAM) or the like as a work area. Note that the control unit 130 may be realized by an integrated circuit such as an application specific integrated circuit (ASIC) or a field programmable gate array (FPGA). Any of the CPU, the MPU, the ASIC, and the FPGA can be regarded as a controller.

As illustrated in FIG. 6, the control unit 130 includes a pose estimation unit 131, an occupancy map generation unit 132, and an area estimation unit 133. Each block (pose estimation unit 131 to area estimation unit 133) configuring the control unit 130 is a functional block indicating a function of the control unit 130. These functional blocks may be software blocks or hardware blocks. For example, each of the functional blocks described above may be one software module realized by software (microprogram), or may be one circuit block on a semiconductor chip (die). It is apparent that each functional block may be one processor or one integrated circuit. A configuration method of the functional blocks is arbitrary. Note that the control unit 130 may be configured by a functional unit different from the above-described functional block.

### (Pose estimation unit 131)

The pose estimation unit 131 estimates an attitude (pose) of the terminal device 200 based on a sensing result acquired by the sensor unit 220 of the terminal device 200. For example, the pose estimation unit 131 acquires a measurement result (hereinafter also referred to as position and attitude information.) of the IMU, which is an example of the sensor unit 220, and a photographing result of the camera (hereinafter also referred to as a camera image).

The pose estimation unit 131 estimates a self position/attitude (hereinafter also referred to as a camera pose) and a gravity direction of the terminal device 200 (or user U) based on the position and attitude information and the camera image acquired. The pose estimation unit 131 outputs the estimated camera pose and gravity direction to the occupancy map generation unit 132.

### (Occupancy map generation unit 132)

The occupancy map generation unit 132 generates or updates the occupancy map based on the camera pose, the gravity direction, and the distance information. As described above, the occupancy map generation unit 132 acquires the camera pose and the gravity direction from the pose estimation unit 131. For example, the occupancy map generation unit 132 acquires a depth map as the distance information from the terminal device 200.

As illustrated in FIG. 6, the occupancy map generation unit 132 includes an estimation processing unit 1321 and an integrated processing unit 1322.

### (Estimation processing unit 1321)

The estimation processing unit 1321 estimates the person region in the depth map based on the camera pose, the gravity direction, and the distance information. In addition, the estimation processing unit 1321 assigns a person region reliability value c to each pixel of the depth map corresponding to the estimated person region.

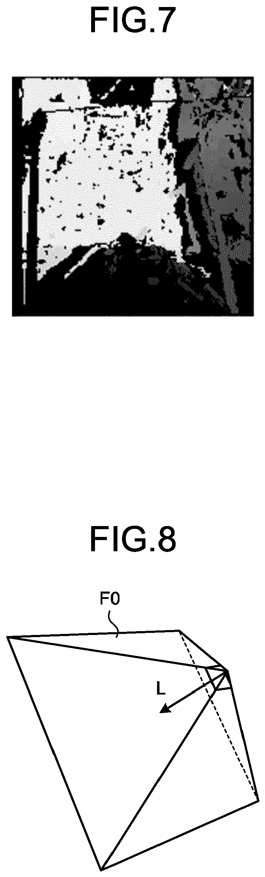

First, estimation of the person region by the estimation processing unit 1321 will be described. FIG. 7 is a diagram illustrating an example of the depth map acquired by the estimation processing unit 1321 according to the embodiment of the present disclosure. FIG. 8 is a diagram illustrating an example of a range-finding area in the depth map by the terminal device 200 according to the embodiment of the present disclosure.

It is assumed that the estimation processing unit 1321 acquires the depth map as illustrated in FIG. 7. In this case, the sensor unit 220 (distance measuring device) of the terminal device 200 generates a distance to an object present in a range-finding area F0 expressed by a quadrangular pyramid in FIG. 8 as the depth map illustrated in FIG. 7.

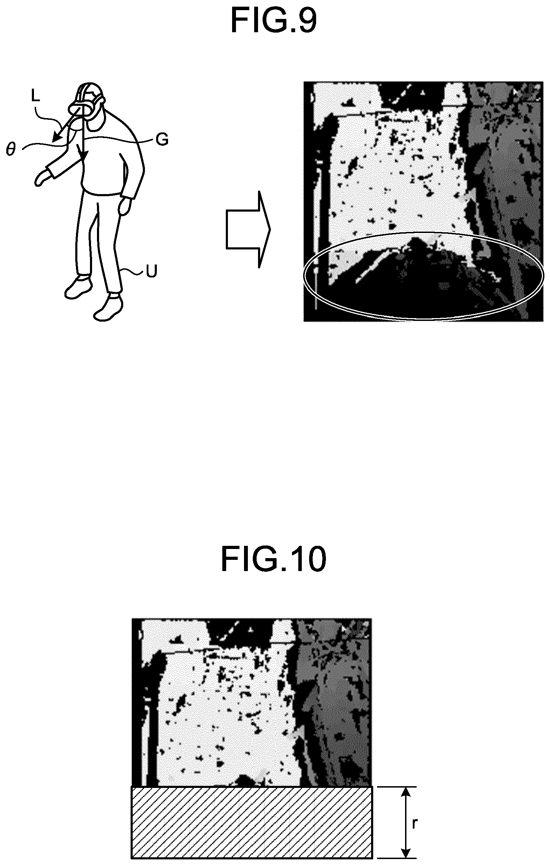

Here, as described above, as the face direction of the user U, in other words, the distance measurement direction of the distance measuring device, is further directed downward, the user U is more likely included in the range-finding area. This point will be described with reference to FIG. 9. FIG. 9 is a diagram illustrating appearance of the user U according to the embodiment of the present disclosure.

As illustrated in a left diagram of FIG. 9, in the present embodiment, an angle formed by a face direction vector L of the user U (distance measurement direction of the distance measuring device) and a centroid direction vector G is a downward angle θ. Here, a distance measurement direction vector L of the distance measuring device is a vector extending perpendicularly from a vertex of the quadrangular pyramid, which is a range-finding area, to a bottom surface (see FIG. 8). Note that the distance measurement direction vector L is also referred to as a front direction vector L or a front distance measurement direction vector L of the distance measuring device. Furthermore, here, it is assumed that the face direction of the user U and the front distance measurement direction are the same, but the face direction of the user U and the front distance measurement direction are not necessarily the same.

The description returns to FIG. 9. As the downward angle θ illustrated in the left diagram of FIG. 9 becomes smaller, the user U is more likely to appear larger on a lower side (circled portion in a right diagram of FIG. 9) of the depth map illustrated in the right diagram of FIG. 9. Note that, in the depth map illustrated in the right diagram of FIG. 9, the lower side indicates a distance measurement result in a foot direction of the user U, and the upper side indicates a distance measurement result in a head direction of the user U.

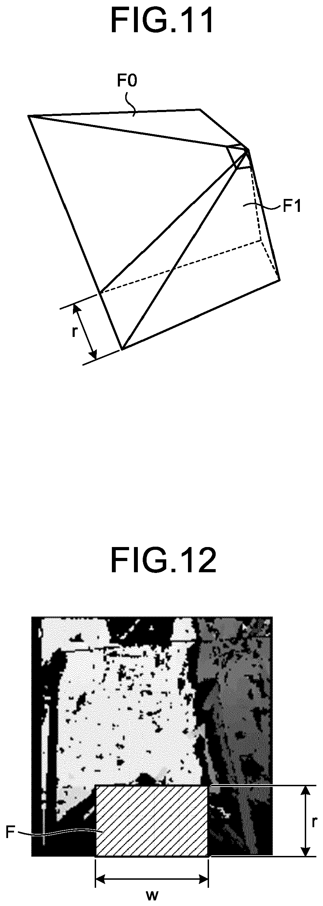

Therefore, the estimation processing unit 1321 according to the embodiment of the present disclosure increases a height r of the person region as the downward angle θ decreases. FIGS. 10 and 11 are diagrams illustrating a length r of the person region according to the embodiment of the present disclosure.

As illustrated in FIG. 10, in the present embodiment, the height r of the person region is defined as a length from the lower side of the depth map. This corresponds to a quadrangular pyramid region F1 whose bottom surface is the length r from one side of the bottom surface of the range-finding area F0 illustrated as a quadrangular pyramid in FIG. 11.

For example, the estimation processing unit 1321 determines the length r of the person region by using Expression (1) below.$r = max \left(0,{r}_{max}\frac{cosθ - {cosθ}_{min}}{{cosθ}_{max} - {cosθ}_{min}}\right)$ (1)

Note that rₘₐₓ is the maximum value of the length r, and is a value that can be changed according to the size of the depth map, the distance measurement direction L, and the like. θₘₐₓ and θₘᵢₙ are parameters changed according to a value of the person region reliability value c to be described later. The estimation processing unit 1321 can estimate a plurality of person regions having different lengths r according to the person region reliability value c by changing values of θₘₐₓ and θₘᵢₙ according to the person region reliability value c.

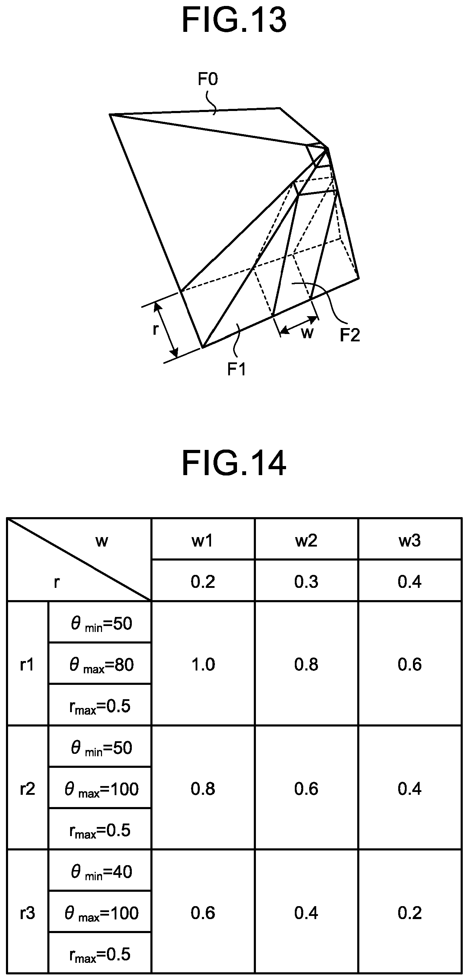

Next, a width w of the person region will be described with reference to FIGS. 12 and 13. FIGS. 12 and 13 are diagrams illustrating the width w of the person region according to the embodiment of the present disclosure.

Generally, a width of a person (user U) is narrower than the ranging range of the distance measuring device. Therefore, as illustrated in FIG. 12, the estimation processing unit 1321 sets a person region F having the width w of the person region narrower than the width of the depth map. This corresponds to a region F2 in which w is a length along a long side of the bottom surface of the region F1 illustrated as a quadrangular pyramid in FIG. 13.

The estimation processing unit 1321 changes the width w according to the person region reliability value c to be described later. Thus, the estimation processing unit 1321 can estimate the plurality of person regions F having different widths w according to the person region reliability value c.

The estimation processing unit 1321 estimates the person region F having the length r and the width w in the depth map, and assigns the person region reliability value c to the pixel included in the person region F.

As described above, the estimation processing unit 1321 estimates the plurality of person regions F. The estimation processing unit 1321 sets different person region reliability values c for the plurality of person regions F.

FIG. 14 is an example of a person region reliability value table according to the embodiment of the present disclosure. The person region reliability value table is generated based on, for example, an experiment. For example, it is assumed that the person region reliability value table is stored in advance in the storage unit 120 (see FIG. 6) of the information processing apparatus 100. The estimation processing unit 1321 refers to the person region reliability value table stored in the storage unit 120 to determine the person region reliability value c according to the length r and the width w.

As illustrated in FIG. 14, the person region reliability value table holds the person region reliability values c corresponding to a combination of the plurality of lengths r and the plurality of widths w. The example in FIG. 14 illustrates a case where the person region reliability value c, in other words, the person region F, is set according to combinations of three lengths r = r1 to r3 and three widths w = w1 to w3.

The value of the length r changes according to the downward angles θ, rₘₐₓ, θₘₐₓ, and θₘᵢₙ. Here, the downward angle θ is uniquely determined when the depth map is generated. In other words, the distance measuring device performs distance measurement at a predetermined downward angle θ to generate a depth map. Therefore, the length r set for a predetermined depth map is a value corresponding to rₘₐₓ, θₘₐₓ, and θₘᵢₙ. In other words, as illustrated in FIG. 14, a plurality of lengths r is set according to the values of rₘₐₓ, θₘₐₓ, and θₘᵢₙ.

In FIG. 14, the length r and the width w are values indicating a proportion of the person region F in the height direction or the width direction of the depth map. In other words, when the length r is "0" or the width w is "0", the person region F is not included in the depth map, and when the length r is "1" and the width w is "1", an entire region of the depth map is the person region F.

In FIG. 14, rₘₐₓ is set to "0.5", and the plurality of lengths r = r1 to r3 is set by changing the values of θₘₐₓ and θₘᵢₙ. In other words, in the person region reliability value table illustrated in FIG. 14, the maximum value of the length r is set to "0.5". Therefore, a lower half of the depth map can be set as the person region F at the maximum.

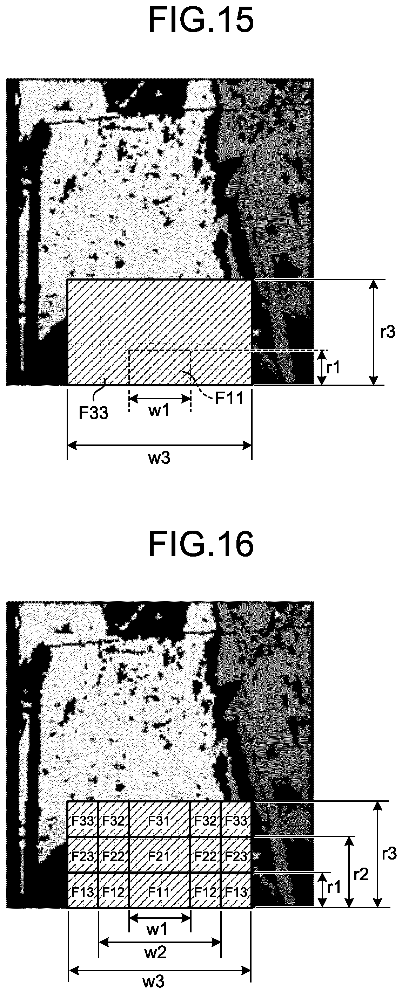

FIGS. 15 and 16 are diagrams illustrating an example of the person region F according to the embodiment of the present disclosure. FIG. 15 illustrates a person region F11 having a length r1 and a width w1, and a person region F33 having a length r3 and a width w3. In FIGS. 15 and 16, it is assumed that the downward angle θ has a predetermined value.

The estimation processing unit 1321 refers to the person region reliability value table illustrated in FIG. 14, and sets "1.0" as the person region reliability value c in a pixel included in the person region F11. Further, the estimation processing unit 1321 refers to the person region reliability value table illustrated in FIG. 14, and sets "0.2" as the person region reliability value c in a pixel included in the person region F33.

As illustrated in FIG. 15, since a part of the person region F33 overlaps with the person region F11, a plurality of person region reliability values c may be set in the overlapped portion. As described above, when the plurality of person regions overlaps, the estimation processing unit 1321 assigns a larger person region reliability value c (c = 1.0 in this case) to the pixel of the overlapping region.

As illustrated in FIG. 16, the estimation processing unit 1321 estimates a plurality of person regions F11, F12, F13, F21, F22, F23, F31, F32, and F33 according to the person region reliability value table. The estimation processing unit 1321 generates the depth map with person region reliability value by setting the person region reliability value c for each of the plurality of person regions according to the person region reliability value table.

The estimation processing unit 1321 outputs the generated depth map with person region reliability value to the integrated processing unit 1322.

### (Integrated Processing Unit 1322)

The integrated processing unit 1322 generates the occupancy map based on the camera pose and the depth map with person region reliability value. As described above, the occupancy map is a known technology generated by a method disclosed in, for example, Reference [1].

The integrated processing unit 1322 updates the occupancy map each time by changing the occupancy probability based on observation of a depth point for each voxel of the occupancy map. At this time, the integrated processing unit 1322 changes (varies) the occupancy probability according to the person region reliability value c. For example, to change the occupancy probability, the integrated processing unit 1322 generates an occupancy map in which erroneous detection of the user U is further reduced by reducing an influence of a voxel corresponding to a pixel having a high person region reliability value c.

For example, as disclosed in Reference [1] described above, when there is depth observation Z_{1:t} from time 1 to time t, the occupancy probability P (n|Z_{1:t}) of a voxel n is calculated based on Expression (2) below.$P \left(n\left|{z}_{1 : t}\right.\right) = {\left[1+\frac{1 - P \left(n\left|{z}_{t}\right.\right)}{P \left(n\left|{z}_{t}\right.\right)}-\frac{1 - P \left(n\left|{z}_{1 : t - 1}\right.\right)}{P \left(n\left|{z}_{1 : t - 1}\right.\right)}\frac{P \left(n\right)}{1 - P \left(n\right)}\right]}^{- 1}$ (2)

In addition, this Expression (2) can be written as Expressions (3) and (4) below. $L \left(n\left|{z}_{1 : t}\right.\right) = L \left(n\left|{z}_{1 : t - 1}\right.\right) + L \left(n\left|{z}_{t}\right.\right)$ (3) $L \left(n\right) = log \left[\frac{P \left(n\right)}{1 - P \left(n\right)}\right]$ (4)

Here, the integrated processing unit 1322 according to the embodiment of the present disclosure changes Expression (3) to Expression (5) below to generate an occupancy map 1 reflecting the person region reliability value c.$L \left(n\left|{z}_{1 : t}\right.\right) = L \left(n\left|{z}_{1 : t - 1}\right.\right) + \left(1-c\right) L \left(n\left|{z}_{t}\right.\right)$ (5)

Here, c is the person region reliability value. In other words, as illustrated in Expression (5), as the person region reliability value c is closer to "1", the distance information is less likely to be reflected in the occupancy map.

The integrated processing unit 1322 outputs the generated occupancy map to the area estimation unit 133.

### (Area estimation unit 133)

The area estimation unit 133 estimates the play area in which the user U can safely move based on the occupancy map generated by the integrated processing unit 1322, the gravity direction, the position of the user U, and the like. For example, the area estimation unit 133 estimates a floor plane from the occupancy map, and sets the floor plane where the user U is located as a play area.

### <2.3. Example of information processing>

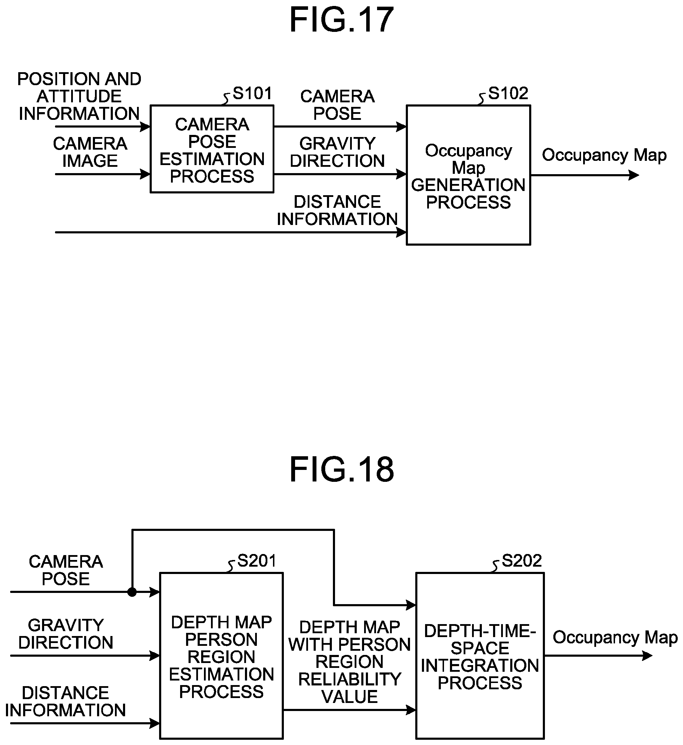

FIG. 17 is a diagram illustrating an example of information processing according to the embodiment of the present disclosure. For example, the information processing illustrated in FIG. 17 is executed in a predetermined cycle by the information processing apparatus 100. Note that the predetermined cycle may be the same as a distance measurement cycle of the distance measuring device.

As illustrated in FIG. 17, when the position and attitude information and the camera image are acquired from the terminal device 200, the information processing apparatus 100 executes a camera pose estimation process (Step S101) to estimate a camera pose and a gravity direction.

The information processing apparatus 100 executes an occupancy map generation process using the estimated camera pose and gravity direction and the distance information acquired from the terminal device 200 (Step S102) to generate an occypancy map.

FIG. 18 is a diagram illustrating an example of the occupancy map generation process according to the embodiment of the present disclosure. For example, the occupancy map generation process illustrated in FIG. 18 is executed by the information processing apparatus 100.

The information processing apparatus 100 performs a depth map person region estimation process using the camera pose, the gravity direction, and the distance information (depth map) (Step S201) to generate a depth map with person region reliability value.

For example, the information processing apparatus 100 estimates at least one person region F using the camera pose and the gravity direction, and sets the person region reliability value c corresponding to the person region F to a pixel in the person region F. The information processing apparatus 100 sets the person region reliability value c such that the person region reliability value c increases as the distance measuring device, in other words, the person region, is closer to the user U.

The information processing apparatus 100 performs a depth-time-space integration process using the camera pose and the depth map with person region reliability value (Step S202), to generate an occupancy map. For example, the information processing apparatus 100 updates the occupancy probability of each voxel so that the occupancy probability of the voxel corresponding to the pixel having the large person region reliability value c is hardly updated.

As a result, the information processing apparatus 100 can further reduce erroneous detection of the user U, and can generate the occupancy map with higher accuracy. Therefore, the information processing apparatus 100 can set the play area with higher accuracy.

As a method of reducing erroneous detection of the user U, for example, there is a method of using machine learning. For example, Reference [2] discloses a method of detecting the person region from a color image of a first-person viewpoint using deep learning. However, a recognizer used in deep learning requires a large calculation resource. In addition, Reference [2] does not refer to the occupancy map.

On the other hand, the information processing apparatus 100 according to the embodiment of the present disclosure can estimate the person region without using the recognizer, and can further reduce the influence of the user U on the occupancy map at high speed without using a large calculation resource.

Furthermore, the information processing apparatus 100 according to the embodiment of the present disclosure can generate the occupancy map with reduced influence of the user U by using sensing results of the distance measuring device, the IMU, or the like provided in the terminal device 200. As described above, the information processing apparatus 100 can generate the occupancy map with high accuracy without using a device for detecting the person region F such as a controller.

Furthermore, the information processing apparatus 100 according to the embodiment of the present disclosure can generate the occupancy map while the user U moves. In this case, the information processing apparatus 100 can estimate a region near a moving user U as the person region F, and generate an occupancy map in which the influence of the person region F is reduced.

Furthermore, the information processing apparatus 100 can generate the occupancy map in which the influence of the user U is reduced based on the gravity direction, the camera pose, and the depth map. Therefore, when the gravity direction, the camera pose, and the depth map can be acquired, the information processing apparatus 100 can generate the occupancy map in which the influence of the user U is reduced even when a color image cannot be acquired.

### <<3. First modification>>

The above embodiment mainly describes the case where the user U is standing, but the information processing apparatus 100 may detect whether the user U is standing or sitting.

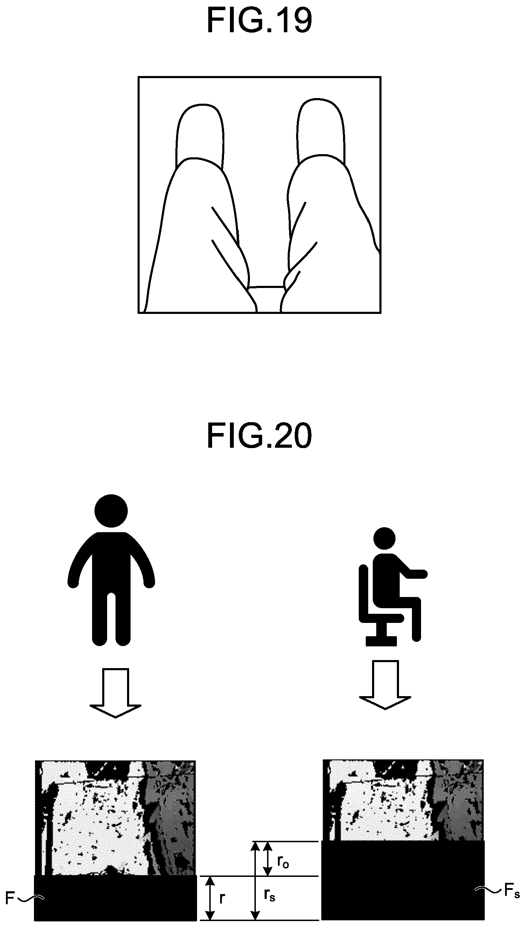

FIG. 19 is a diagram illustrating a posture of the user U according to a first modification of the embodiment of the present disclosure. As illustrated in FIG. 19, when the user U faces downward while the user U is seated (sitting), the person region F that appears in the camera (depth map) becomes larger than that when the user U is standing.

Therefore, in the present modification, the information processing apparatus 100 detects whether the user U is standing or sitting as a user posture, in addition to the camera pose, and corrects the person region F when a sitting position is detected.

FIG. 20 is a diagram illustrating an example of correction of the person region F according to the first modification of the embodiment of the present disclosure.

As illustrated in a left diagram of FIG. 20, when a standing position of the user U is detected, the information processing apparatus 100 estimates a region having the height r as described above as the person region F. On the other hand, as illustrated in a left diagram of FIG. 20, when the sitting position of the user U is detected, the information processing apparatus 100 estimates, as a person region Fₛ, a region having a height of rₛ = r + rₒ obtained by adding an offset value rₒ to r.

More specifically, when the sitting position of the user U is detected, the information processing apparatus 100 corrects the person region F by calculating the height r using Expression (6) below instead of Expression (1) to estimate the person region Fₛ.$r = max \left(0,{r}_{max}\frac{cosθ - {cosθ}_{min}}{{cosθ}_{max} - {cosθ}_{min}}+{r}_{0}\right)$ (6)

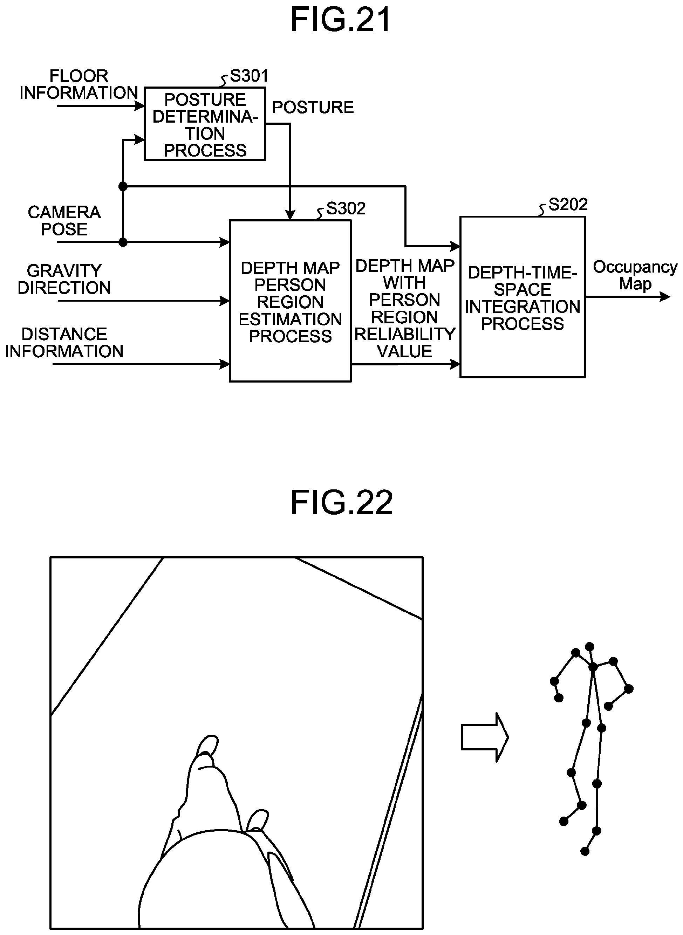

FIG. 21 is a diagram illustrating an example of an occupancy map generation process according to the first modification of the embodiment of the present disclosure.

The control unit 130 (see FIG. 6) of the information processing apparatus 100 executes a posture determination process for determining the posture (standing/sitting position) of the user U based on the floor plane and the camera pose (Step S301).

For example, the information processing apparatus 100 detects the floor plane by calculating the maximum plane by RANSAC with respect to the occupancy map. Note that the calculation of the maximum plane by RANSAC can be executed using, for example, the technology described in Reference [3].

Here, a distance between the floor plane and the terminal device 200 corresponds to an eye height of the user U. Therefore, the information processing apparatus 100 detects the eye height of the user U based on the floor plane and the camera pose. The information processing apparatus 100 detects the standing position when the detected eye height is a predetermined threshold or more, and detects the sitting position when the detected eye height is less than the predetermined threshold. Note that the predetermined threshold may be a value determined in advance, and may be set, for example, according to a height of the user U. The height of the user U may be input by the user U himself/herself or may be estimated from an external camera (not illustrated) or the like.

The information processing apparatus 100 executes the depth map person region estimation process based on the posture of the user U in addition to the camera pose, the gravity direction, and the distance information (Step S302) to generate a depth map with person region reliability value.

When the standing position (standing state) is detected as the posture of the user U, the information processing apparatus 100 generates the depth map with person region reliability value in the same manner as in the embodiment.

On the other hand, when the sitting position (sitting state) is detected as the posture of the user U, the information processing apparatus 100 generates the depth map with person region reliability value using Expression (6) instead of Expression (1). The method of estimating the person region Fₛ is the same as the method of estimating the person region F of the embodiment except for the calculation of the height rₛ, and thus the description thereof will be omitted.

As described above, the information processing apparatus 100 can estimate a corrected person region Fₛ by detecting the sitting position as the posture of the user U. As a result, the accuracy of generating the occupancy map can be further improved.

### <<4. Second modification>>

In the embodiment described above, the information processing apparatus 100 detects the front distance measurement direction as the posture of the user U, but the present disclosure is not limited thereto. For example, the information processing apparatus 100 may detect the posture itself of the user U.

FIG. 22 is a diagram illustrating the posture of the user U according to a second modification of the embodiment of the present disclosure.

As illustrated in a left diagram of FIG. 22, the information processing apparatus 100 acquires a camera image from the terminal device 200. The information processing apparatus 100 estimates a skeleton of the user U as the posture from the camera image. For example, a technology for estimating the skeleton as the posture of the user U from the camera image of the first-person viewpoint is disclosed in Reference [4]. Furthermore, the information processing apparatus 100 can estimate the posture of the user U even from other than the camera image by using an external sensor, for example, as described in Reference [5].

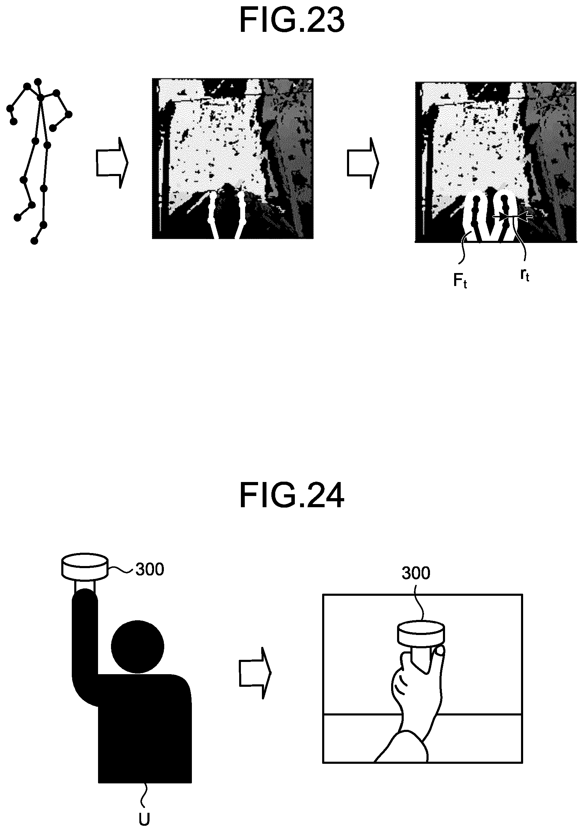

FIG. 23 is a diagram illustrating a person region Fₜ according to a third modification of the embodiment of the present disclosure.

When estimating the skeleton of the user U as the posture as illustrated in a left diagram of FIG. 23, for example, the information processing apparatus 100 reflects the skeleton in the depth map as illustrated in a middle diagram of FIG. 23.

The information processing apparatus 100 sets a range of a radius rₜ centered on the skeleton reflected in the depth map as the person region Fₜ. The information processing apparatus 100 sets the person region reliability value c corresponding to a value of the radius rₜ (e.g., rₜ = rₜ1 to rt3) to each pixel in the person region Fₜ.

It is assumed that a smaller value of the radius rₜ results in a larger person region reliability value c. Furthermore, when person regions having different radii overlap, the information processing apparatus 100 sets a larger value as the person region reliability value c of the overlapping region.

In this way, the information processing apparatus 100 estimates the person region Fₜ with the skeleton of the user U as the posture of the user U, and generates the depth map with person region reliability value. Note that the occupancy map generation process using the depth map with person region reliability value is the same as that in the embodiment, and thus description thereof will be omitted.

### <<5. Third modification>>

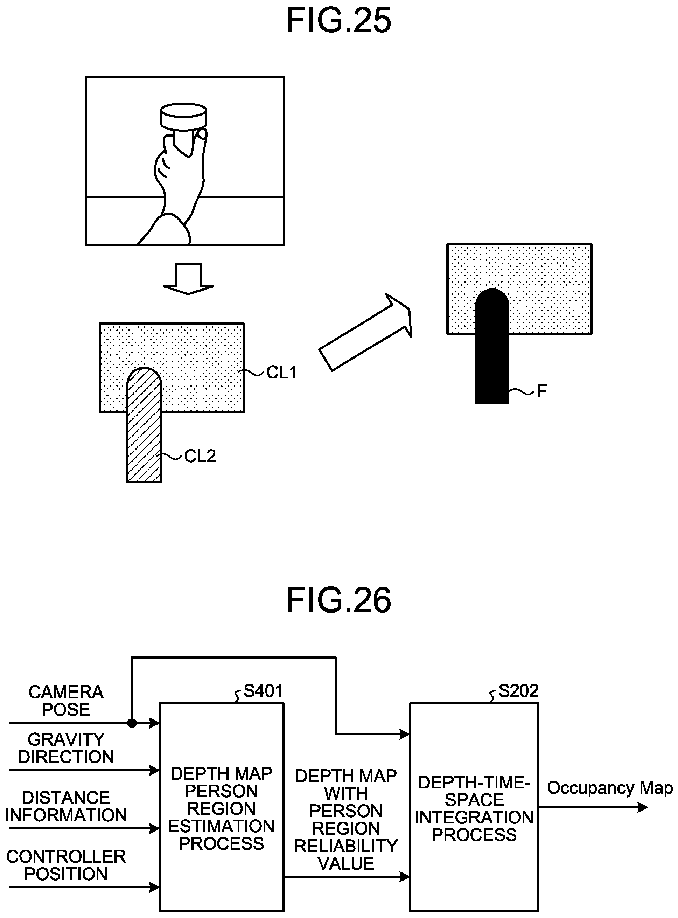

A case where an arm of the user U is detected as the person region F will be described as a third modification of the embodiment of the present disclosure. FIGS. 24 and 25 are diagrams illustrating an example of detection of the person region F according to the third modification of the embodiment of the present disclosure.

As illustrated in a left diagram of FIG. 24, in the present modification, it is assumed that the user U grips, for example, a game controller 300 (example of second device). As illustrated in a right diagram of FIG. 24, the information processing apparatus 100 acquires the distance information (depth map) including a person's arm and the controller 300. Furthermore, the information processing apparatus 100 acquires, for example, information regarding the controller 300 (e.g., position information) from the controller 300. The information processing apparatus 100 estimates the arm of the user U as the person region according to the acquired position information of the controller 300.

The information processing apparatus 100 executes a clustering process on the depth map. The information processing apparatus 100 performs clustering by calculating a distance between measurement points (pixels) of the depth map using the k-means method described in, for example, Reference [6].

The information processing apparatus 100 acquires a point group including the controller 300 among clustered point clouds based on the position information of the controller 300. In the point clouds including the controller 300, the information processing apparatus 100 sets a point cloud closer to the terminal device 200 than the controller 300 as the person region F. The information processing apparatus 100 generates the depth map with person region reliability value by setting the person region reliability value c to the pixel included in the person region F in the depth map.

In the example in FIG. 25, the information processing apparatus 100 performs the clustering process on the depth map illustrated in an upper left diagram, and detects point cloud regions CL1 and CL2 illustrated in a lower left diagram. The information processing apparatus 100 includes the controller 300 based on the position information of the controller 300, and estimates the point cloud region CL2 closer to the terminal device 200 than the controller 300 as the person region F as illustrated in a right diagram.

FIG. 26 is a diagram illustrating an example of an occupancy map generation process according to the third modification of the embodiment of the present disclosure.

As illustrated in FIG. 26, the information processing apparatus 100 executes the depth map person region estimation process using the camera pose, the gravity direction, the distance information, and the position information of the controller 300 (Step S401).

For example, the information processing apparatus 100 estimates the person region F using the camera pose, the gravity direction, and the distance information similarly to the embodiment. Furthermore, the information processing apparatus 100 estimates the arm of the user U as the person region F using the distance information and the position information of the controller 300.

The information processing apparatus 100 sets the person region reliability value c to the pixel of the estimated person region F in the depth map, and generates the depth map with person region reliability value. Note that the depth-time-space integration process using the depth map with person region reliability value is the same as that of the embodiment, and thus description thereof will be omitted.

As described above, the information processing apparatus 100 estimates the arm of the user U as the person region F using the position information of the controller 300 gripped by the user U. As a result, the information processing apparatus 100 can generate the occupancy map with higher accuracy.

Note that, here, the information processing apparatus 100 estimates the point cloud region CL2 closer to the terminal device 200 than the controller 300 as the person region F, but the present disclosure is not limited thereto. For example, the information processing apparatus 100 may divide the point cloud region CL2 into a plurality of person regions. More specifically, for example, the information processing apparatus 100 may set a plurality of person regions F such that the person region reliability value c increases as the point cloud region CL2 is closer to the terminal device 200.

### <<6. Fourth modification>>

In the embodiment described above, the information processing apparatus 100 updates the voxel of the occupancy map based on a degree of influence according to the person region reliability value c, but the present disclosure is not limited thereto. Here, an example in which the information processing apparatus 100 generates the occupancy map using the person region reliability value c will be described.

In the present modification, the information processing apparatus 100 generates two maps: a person region occupancy map (person region environment information) and an environment occupancy map (surrounding environment information), and generates an occupancy map with reduced influence of the user U from the person region occupancy map and the environment occupancy map. The person region occupancy map is an occupancy map in which the person region reliability value c is input as the occupancy probability. The environment occupancy map is an occupancy map generated without using the person region reliability value c, and corresponds to a conventional occupancy map.

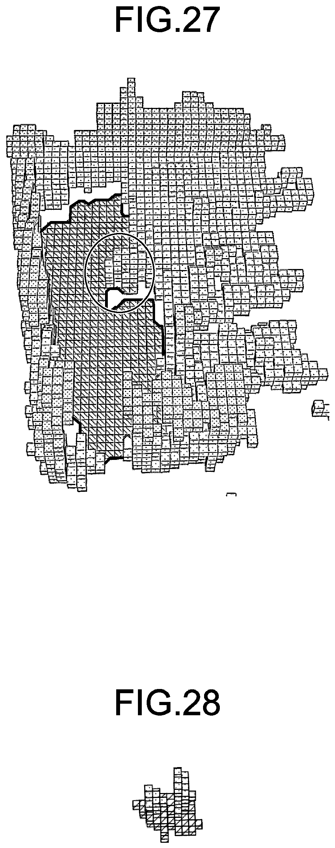

FIG. 27 is a diagram illustrating an example of the environment occupancy map according to a fourth modification of the embodiment of the present disclosure. For example, the information processing apparatus 100 generates the environment occupancy map based on the distance information acquired by the distance measuring device of the terminal device 200. In other words, the information processing apparatus 100 generates the environment occupancy map without using the person region reliability value c. Therefore, in the environment occupancy map, the user U is included as an object (obstacle) as indicated by a circled portion in FIG. 27.

FIG. 28 is a diagram illustrating an example of the person region occupancy map according to the fourth modification of the embodiment of the present disclosure. For example, the information processing apparatus 100 sets the occupancy probability of the voxel corresponding to the pixel in which the person region reliability value c set based on the depth map with person region reliability value as a set person region reliability value c. In other words, the information processing apparatus 100 generates the person region occupancy map using the person region reliability value c as the object occupancy probability.

In this manner, the person region occupancy map handles whether or not it is a person region as the occupancy probability. Therefore, the person region occupancy map is an occupancy map equivalent to the person region.

Thus, the information processing apparatus 100 generates an occupancy map that does not include the person region by subtracting the person region occupancy map from the generated environment occupancy map. More specifically, the information processing apparatus 100 generates the occupancy map by regarding the voxel of the environment occupancy map corresponding to the occupied voxel of the person region occupancy map as an unknown voxel.

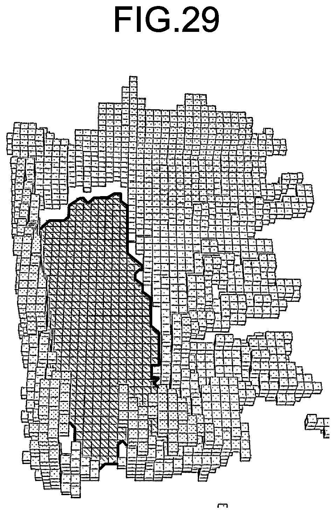

FIG. 29 is a diagram illustrating an example of the occupancy map according to the fourth modification of the embodiment of the present disclosure. As described above, the information processing apparatus 100 generates the occupancy map excluding the person region by subtracting the person region occupancy map from the generated environment occupancy map.

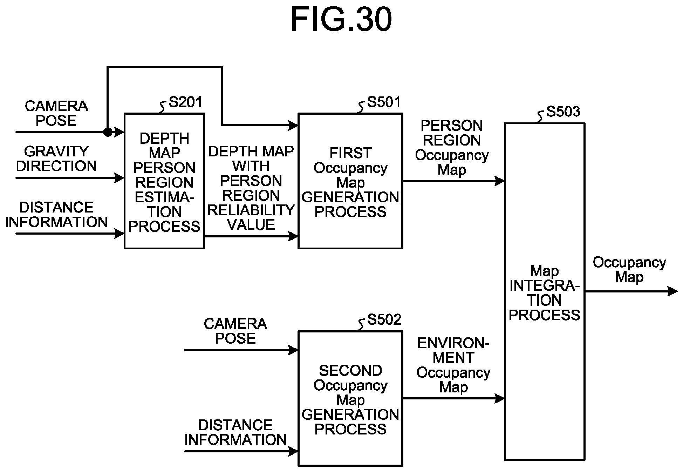

FIG. 30 is a diagram illustrating an example of the occupancy map generation process according to the fourth modification of the embodiment of the present disclosure. Note that a process in which the information processing apparatus 100 generates the depth map with person region reliability value is the same as that in the embodiment, and thus description thereof will be omitted.

The information processing apparatus 100 executes a first occupancy map generation process using the camera pose and the depth map with person region reliability value (Step S501) to generate a person region occupancy map. For example, the information processing apparatus 100 generates the person region occupancy map using the person region reliability value c as the object occupancy probability.

In addition, the information processing apparatus 100 executes a second occupancy map generation process using the camera pose and the distance information (depth map) (Step S502) to generate an environment occupancy map. Here, the person region reliability value c is not assigned to the distance information (depth map) used by the information processing apparatus 100 for generating the environment occupanry map. The information processing apparatus 100 generates the environment occupancy map using, for example, a conventional method.

Next, the information processing apparatus 100 executes a map integration process using the generated person region occupancy map and environment occupancy map (Step S503) to generate an occupancy map. For example, the information processing apparatus 100 generates an occupancy map that does not include the person region by subtracting (or masking) the person region occupancy map from the environment occupancy map.

As described above, in the present modification, the information processing apparatus 100 generates the person region occupancy map, and subtracts the person region occupancy map from the environment occupancy map, so that it is possible to generate the occupancy map in which the influence of the user U is further reduced.

### <<7. Fifth modification>>

When the occupancy map is generated, the information processing apparatus 100 can use plane information to generate the occupancy map in which the influence of the person region is further reduced. Here, generation of an occupancy map using the plane information that is a plane region, for example, will be described as a fifth modification.

The surrounding environment of the user U includes many planes parallel to the floor, such as a desk. The person region is not included in the plane. Therefore, the information processing apparatus 100 generates an occupancy map by excluding the plane region from the person region.

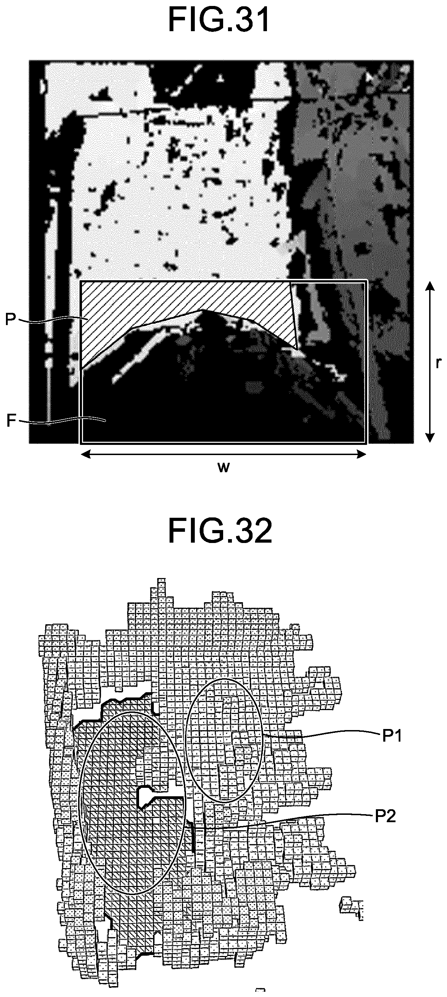

FIG. 31 is a diagram illustrating the plane region according to the fifth modification of the embodiment of the present disclosure. As described above, the information processing apparatus 100 estimates a rectangular person region F having a height r and a width w. Therefore, as illustrated in FIG. 31, not only the user U but also a plane region P such as the floor may be included.

Therefore, the information processing apparatus 100 according to the present modification corrects the person region F by excluding the plane region P from the person region F to generate an occupancy map.

Specifically, for example, the information processing apparatus 100 updates the occupancy map without using the person region reliability value c, and generates a plane detection map. FIG. 32 is a diagram illustrating an example of the plane detection map according to the fifth modification of the embodiment of the present disclosure.

The information processing apparatus 100 detects a plane from the plane detection map. For example, the information processing apparatus 100 acquires a set of center points of occupied voxels in the plane detection map as a point cloud. Next, the information processing apparatus 100 repeatedly detects a plane using, for example, RANSAC described in Reference [3].

The information processing apparatus 100 extracts, as the plane region, a plane having a normal line in the gravity direction and including a point equal to or greater than a predetermined threshold among the detected planes. For example, in FIG. 32, the information processing apparatus 100 extracts two plane regions P1 and P2. The information processing apparatus 100 may extract one plane region or a plurality of plane regions.

The information processing apparatus 100 updates the occupancy map using the depth map with person region reliability value. At this time, the information processing apparatus 100 regards the person region reliability value c of the voxel included in the detected plane region as "0" and updates the occupancy map.

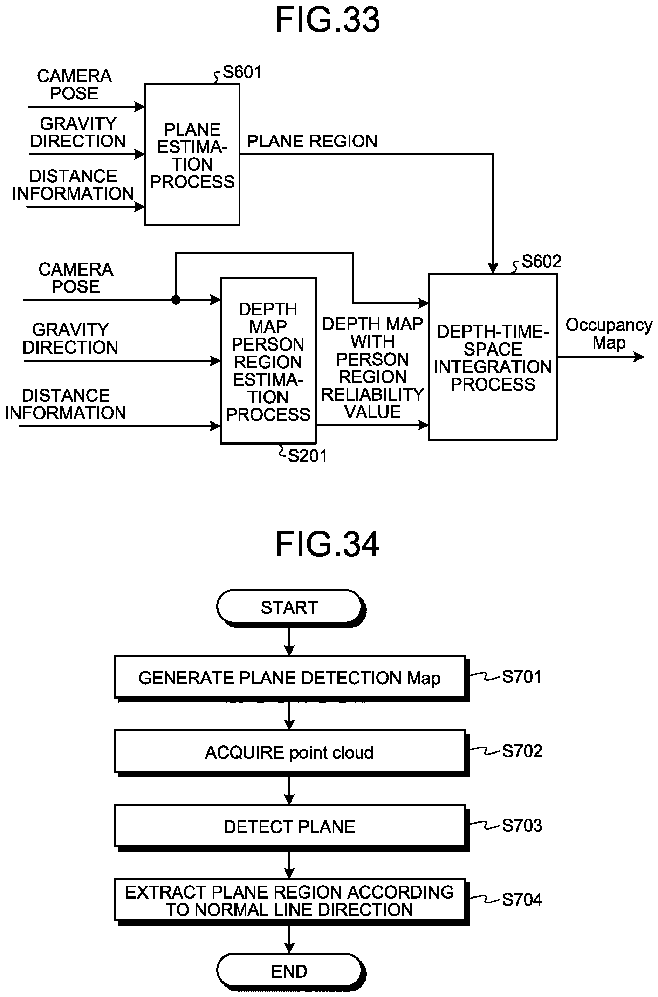

Next, FIG. 33 is a diagram illustrating an example of an occupancy map generation process according to the fifth modification of the embodiment of the present disclosure. Note that the depth map person region estimation process illustrated in FIG. 33 is the same as the processing of the embodiment, and thus description thereof will be omitted.

The information processing apparatus 100 executes a plane estimation process using the camera pose, the gravity direction, and the distance information (Step S601) to extract the plane region.

Here, FIG. 34 is a flowchart illustrating an example of a flow of the plane estimation process according to the fifth modification of the embodiment of the present disclosure.

First, the information processing apparatus 100 generates the plane detection map (Step S701). For example, the information processing apparatus 100 generates the plane detection map by updating the occupancy map without using the person region reliability value c.

Next, the information processing apparatus 100 acquires the point cloud from the plane detection map (Step S702). For example, the information processing apparatus 100 acquires a set of center points of occupied voxels in the plane detection map as a point cloud.

The information processing apparatus 100 detects a plane using the acquired pint cloud (Step S703). The information processing apparatus 100 repeatedly detects the plane using, for example, RANSAC described in Reference [3].

The information processing apparatus 100 extracts the plane region from the plane detected in Step S703 according to the normal line direction (Step S704). The information processing apparatus 100 extracts, among the detected planes, a plane having a normal line in the gravity direction and including a point equal to or greater than a predetermined threshold as the plane region parallel to the floor.

The description returns to FIG. 33. The information processing apparatus 100 that has extracted the plane region in the plane estimation process executes the depth-time-space integration process using the plane region, the camera pose, and the depth map with person region reliability value (Step S602) to generate an occupancy map. The information processing apparatus 100 regards the person region reliability value c of the voxel included in the plane region as "0", and updates the occupancy map.

As described above, the information processing apparatus 100 according to the present modification detects the plane region parallel to the floor and generates the occupancy map by excluding the plane region from the person region. As a result, even in a case where the person region of the depth map includes environment such as a floor or a table near the user U, the information processing apparatus 100 can more accurately estimate the person region. Therefore, the information processing apparatus 100 can generate an occupancy map with higher accuracy.

### <<8. Other Embodiments>>

The above-described embodiment and modification are examples, and various modifications and applications are possible.

For example, some functions of the information processing apparatus 100 of the present embodiment may be implemented by the terminal device 200. For example, the terminal device 200 may generate the depth map with person region reliability value, or may generate the occupancy map.

In the above-described embodiment, the information processing apparatus 100 sets the play area of the user U, but the present disclosure is not limited thereto. For example, the information processing apparatus 100 may set, as the play area, a range in which a moving object such as a vehicle or a drone can safely move. Alternatively, the information processing apparatus 100 may set, as the play area, a range in which a partially fixed object such as a robot arm can be safely driven. Accordingly, the target object for which the information processing apparatus 100 sets the play area is not limited to the user U.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. At this time, the control device may be a device (e.g., personal computer) outside the information processing apparatus 100 and the terminal device 200. Furthermore, the control device may be a device (e.g., control units 130 and 250) inside the information processing apparatus 100 and the terminal device 200.

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing content do not contradict each other. Furthermore, the order of each step illustrated in the sequence diagram of the above-described embodiment can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiments can adopt a configuration of cloud computing in which one function is shared and processed by a plurality of devices in cooperation via a network.

### <<9. Hardware Configuration>>

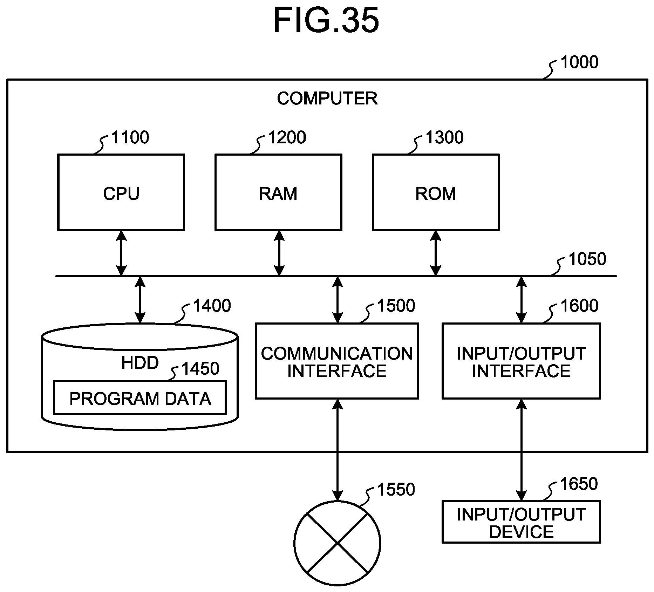

The information processing apparatus such as the information processing apparatus 100 according to each embodiment described above is realized by, for example, a computer 1000 having a configuration as illustrated in FIG. 35. Hereinafter, the information processing apparatus 100 according to the embodiment will be described as an example. FIG. 35 is a hardware configuration diagram illustrating an example of the computer 1000 that implements the functions of the information processing apparatus 100 according to the embodiment of the present disclosure. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates based on a program stored in the ROM 1300 or the HDD 1400, and controls each unit. For example, the CPU 1100 develops a program stored in the ROM 1300 or the HDD 1400 in the RAM 1200, and executes processes corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program for the medical arm control method, which is an example of the program data 1450, according to the present disclosure.

The communication interface 1500 is an interface for the computer 1000 to connect to an external network 1550 (e.g., the Internet). For example, the CPU 1100 receives data from another apparatus or transmits data generated by the CPU 1100 to another apparatus via the communication interface 1500.

The input/output interface 1600 is an interface for connecting an input/output device 1650 and the computer 1000. For example, the CPU 1100 receives data from an input device such as a keyboard or a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded on a predetermined computer-readable recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the information processing apparatus 100 according to the embodiment of the present disclosure, the CPU 1100 of the computer 1000 implements the functions of the control unit 130 and the like by executing a program loaded on the RAM 1200. Note that the CPU 1100 reads the program data 1450 from the HDD 1400 and executes the program data 1450. However, as another example, an information processing program may be acquired from another device via the external network 1550.

Furthermore, the information processing apparatus 100 according to the present embodiment may be applied to a system including a plurality of devices on the premise of connection to a network (or communication between devices), such as cloud computing. In other words, for example, the information processing apparatus 100 according to the present embodiment described above can be implemented as the information processing system 1 according to the present embodiment by the plurality of devices.

An example of the hardware configuration of the information processing apparatus 100 has been described above. Each of the above-described components may be configured using a general-purpose member, or may be configured by hardware specialized for the function of each component. This configuration can be appropriately changed according to a technical level at the time of implementation.

### <<10. Conclusion>>

Although the embodiments of the present disclosure have been described above, the technical scope of the present invention is not limited to the above-described embodiments as it is, and various modifications can be made without departing from the scope of the claims.

Note that the effects of each embodiment described in the present specification are merely examples and not limited thereto, and other effects may be provided.

### Reference Signs List

- 1: INFORMATION PROCESSING SYSTEM

- 100: INFORMATION PROCESSING APPARATUS
- 110, 210: COMMUNICATION UNIT
- 120: STORAGE UNIT
- 130, 250: CONTROL UNIT
- 200: TERMINAL DEVICE
- 220: SENSOR UNIT
- 230: DISPLAY UNIT
- 230: DISPLAY UNIT
- 240: INPUT UNIT
- 300: CONTROLLER

## Claims

1. An information processing apparatus (100) comprising a control unit (130), the control unit (130) being configured to:
estimate a person region (F) including a user (U) in distance information (DM01) generated by a distance measuring device provided in a device (200) used by the user (U), the person region (F) being estimated based on a user posture estimated using a sensor (220) provided in the device (200), wherein the device (200) used by the user (U) is worn on a head of the user and provides predetermined content to the user(U); and
update environment information (OM01) around the user (U) based on the person region (F) and the distance information (DM01), wherein the control unit (130) is configured to estimate the person region (F) based on an angle formed by a front distance measurement direction (L) of the distance measuring device and a gravity direction(G).

2. The information processing apparatus (100) according to claim 1, wherein
the distance information is a depth map (DM01), and
when a pixel of the depth map (DM01) is included in the person region (F), the control unit (130) is configured to assign a person region reliability value (c) to the pixel, which is a value indicating whether the distance information is a distance to the user (U).

3. The information processing apparatus (100) according to claim 2, wherein
the environment information is an occupancy grid map (OM01), and
the control unit (130) is configured to update an occupancy state of each grid of the occupancy grid map (OM01) according to a value corresponding to the person region reliability value (c).

4. The information processing apparatus (100) according to claim 2, wherein the control unit (130) is configured to set the person region reliability value (c) such that the person region reliability value (c) increases as a region is closer to the user (U).

5. The information processing apparatus (100) according to claim 1, wherein the control unit (130) is configured to correct the person region (F) when a sitting position is detected as the user posture.

6. The information processing apparatus (100) according to claim 1, wherein the control unit (130) is configured to estimate an arm of the user (U) as the person region (F) according to a position of a second device (300) gripped by the user (U).

7. The information processing apparatus (100) according to claim 1, wherein
the control unit (130) is configured to update the environment information (OM01) using person region environment information generated based on the distance information (DM01) in the person region (F) and surrounding environment information generated based on the distance information (DM01) in an entire region.

8. The information processing apparatus (100) according to claim 7, wherein
the environment information (OM01), the person region environment information, and the surrounding environment information are occupancy grid maps, and
the control unit (130) is configured to update the environment information (OM01) by changing an occupancy state to an unknown state for a grid corresponding to the person region environment information among grids of the surrounding environment information.

9. The information processing apparatus (100) according to claim 1,wherein
the control unit (130) is configured to correct the person region (F) based on plane information (P, P1, P2) detected using the distance information (DM01).

10. An information processing method comprising:
estimating a person region (F) including a user (U) in distance information (DM01) generated by a distance measuring device provided in a device (200) used by the user (U), the person region (F) being estimated based on a user posture estimated using a sensor (220) provided in the device (200), wherein the device (200) used by the user (U) is worn on a head of the user and provides predetermined content to the user(U); and
updating environment information (OM01) around the user (U) based on the person region (F) and the distance information (DM01), wherein estimating the person region (F) is based on an angle formed by a front distance measurement direction (L) of the distance measuring device and a gravity direction(G).

11. A computer program comprising instructions which, when the program is executed by a processor, cause the processor to perform the steps of:
estimating a person region (F) including a user (U) in distance information (DM01) generated by a distance measuring device provided in a device (200) used by the user (U), the person region (F) being estimated based on a user posture estimated using a sensor (220) provided in the device (200), wherein the device (200) used by the user (U) is worn on a head of the user and provides predetermined content to the user(U); and
updating environment information (OM01) around the user (U) based on the person region (F) and the distance information (DM01), wherein estimating the person region (F) is based on an angle formed by a front distance measurement direction (L) of the distance measuring device and a gravity direction(G).

## Patentansprüche

1. Informationsverarbeitungseinrichtung (100), umfassend eine Steuereinheit (130), wobei die Steuereinheit (130) konfiguriert ist zum:
Schätzen eines Personenbereichs (F), einschließlich eines Benutzers (U), in Abstandsinformationen (DM01), die durch eine Abstandsmessvorrichtung erzeugt werden, die in einer durch den Benutzer (U) verwendeten Vorrichtung (200) bereitgestellt ist, wobei der Personenbereich (F) basierend auf einer Benutzerhaltung geschätzt wird, die unter Verwendung eines in der Vorrichtung (200) bereitgestellten Sensors (220) geschätzt wird, wobei die durch den Benutzer (U) verwendete Vorrichtung (200) an einem Kopf des Benutzers getragen wird und vorbestimmten Inhalt an den Benutzer (U) bereitstellt; und
Aktualisieren von Umgebungsinformationen (OM01) um den Benutzer (U) herum, basierend auf dem Personenbereich (F) und den Abstandsinformationen (DM01), wobei die Steuereinheit (130) konfiguriert ist, um den Personenbereich (F) basierend auf einem Winkel zu schätzen, der durch eine vordere Abstandsmessrichtung (L) der Abstandsmessvorrichtung und eine Schwerkraftrichtung (G) ausgebildet ist.

2. Informationsverarbeitungseinrichtung (100) nach Anspruch 1, wobei
die Abstandsinformationen eine Tiefenkarte (DM01) sind, und
wenn ein Pixel der Tiefenkarte (DM01) in der Personenregion (F) eingeschlossen ist, die Steuereinheit (130) konfiguriert ist, um dem Pixel einen Personenbereichszuverlässigkeitswert (c) zuzuweisen, der ein Wert ist, der angibt, ob die Abstandsinformationen ein Abstand zu dem Benutzer (U) sind.

3. Informationsverarbeitungseinrichtung (100) nach Anspruch 2, wobei
die Umgebungsinformationen eine Belegungsrasterkarte (OM01) sind und
die Steuereinheit (130) konfiguriert ist, um einen Belegungszustand jedes Rasters der Belegungsrasterkarte (OM01) gemäß einem Wert zu aktualisieren, der dem Personenbereichszuverlässigkeitswert (c) entspricht.

4. Informationsverarbeitungseinrichtung (100) nach Anspruch 2, wobei die Steuereinheit (130) konfiguriert ist, um den Personenbereichszuverlässigkeitswert (c) derart einzustellen, dass der Personenbereichszuverlässigkeitswert (c) zunimmt, je näher ein Bereich dem Benutzer (U) ist.

5. Informationsverarbeitungseinrichtung (100) nach Anspruch 1, wobei die Steuereinheit (130) konfiguriert ist, um den Personenbereich (F) zu korrigieren, wenn eine Sitzposition als die Benutzerhaltung erfasst wird.

6. Informationsverarbeitungseinrichtung (100) nach Anspruch 1, wobei die Steuereinheit (130) konfiguriert ist, um einen Arm des Benutzers (U) als den Personenbereich (F) gemäß einer Position einer durch den Benutzer (U) ergriffenen zweiten Vorrichtung (300) zu schätzen.

7. Informationsverarbeitungseinrichtung (100) nach Anspruch 1, wobei
die Steuereinheit (130) konfiguriert ist, um die Umgebungsinformationen (OM01) unter Verwendung von Personenbereichsumgebungsinformationen, die basierend auf den Abstandsinformationen (DM01) in dem Personenbereich (F) erzeugt werden, und Informationen der umliegenden Umgebung, die basierend auf den Abstandsinformationen (DM01) in einem gesamten Bereich erzeugt werden, zu aktualisieren.

8. Informationsverarbeitungseinrichtung (100) nach Anspruch 7, wobei
die Umgebungsinformationen (OM01), die Personenbereichsumgebungsinformationen und die Informationen der umliegenden Umgebung Belegungsrasterkarten sind und
die Steuereinheit (130) konfiguriert ist, um die Umgebungsinformationen (OM01) durch Ändern eines Belegungszustands in einen unbekannten Zustand für ein Raster unter Rastern der Informationen der umliegenden Umgebung zu aktualisieren, das den Personenbereichsumgebungsinformationen entspricht.

9. Informationsverarbeitungseinrichtung (100) nach Anspruch 1, wobei
die Steuereinheit (130) konfiguriert ist, um den Personenbereich (F) basierend auf Ebeneninformationen (P, P1, P2), die unter Verwendung der Abstandsinformationen (DM01) erfasst werden, zu korrigieren.

10. Informationsverarbeitungsverfahren, umfassend:
Schätzen eines Personenbereichs (F), einschließlich eines Benutzers (U), in Abstandsinformationen (DM01), die durch eine Abstandsmessvorrichtung erzeugt werden, die in einer durch den Benutzer (U) verwendeten Vorrichtung (200) bereitgestellt ist, wobei der Personenbereich (F) basierend auf einer Benutzerhaltung geschätzt wird, die unter Verwendung eines in der Vorrichtung (200) bereitgestellten Sensors (220) geschätzt wird, wobei die durch den Benutzer (U) verwendete Vorrichtung (200) an einem Kopf des Benutzers getragen wird und vorbestimmten Inhalt an den Benutzer (U) bereitstellt; und
Aktualisieren von Umgebungsinformationen (OM01) um den Benutzer (U) herum, basierend auf dem Personenbereich (F) und den Abstandsinformationen (DM01), wobei das Schätzen des Personenbereichs (F) auf einem Winkel basiert, der durch eine vordere Abstandsmessrichtung (L) der Abstandsmessvorrichtung und eine Schwerkraftrichtung (G) ausgebildet ist.

11. Computerprogramm, umfassend Anweisungen, die, wenn das Programm durch einen Prozessor ausgeführt wird, den Prozessor veranlassen, die Schritte durchzuführen:
Schätzen eines Personenbereichs (F), einschließlich eines Benutzers (U), in Abstandsinformationen (DM01), die durch eine Abstandsmessvorrichtung erzeugt werden, die in einer durch den Benutzer (U) verwendeten Vorrichtung (200) bereitgestellt ist, wobei der Personenbereich (F) basierend auf einer Benutzerhaltung geschätzt wird, die unter Verwendung eines in der Vorrichtung (200) bereitgestellten Sensors (220) geschätzt wird, wobei die durch den Benutzer (U) verwendete Vorrichtung (200) an einem Kopf des Benutzers getragen wird und vorbestimmten Inhalt an den Benutzer (U) bereitstellt; und
Aktualisieren von Umgebungsinformationen (OM01) um den Benutzer (U) herum, basierend auf dem Personenbereich (F) und den Abstandsinformationen (DM01), wobei das Schätzen des Personenbereichs (F) auf einem Winkel basiert, der durch eine vordere Abstandsmessrichtung (L) der Abstandsmessvorrichtung und eine Schwerkraftrichtung (G) ausgebildet ist.

## Revendications

1. Appareil de traitement d'informations (100) comprenant une unité de commande (130), l'unité de commande (130) étant configurée pour :
estimer une région de personne (F) comportant un utilisateur (U) dans des informations de distance (DM01) générées par un dispositif de mesure de distance fourni dans un dispositif (200) utilisé par l'utilisateur (U), la région de personne (F) étant estimée en fonction d'une posture d'utilisateur estimée à l'aide d'un capteur (220) fourni dans le dispositif (200), dans lequel le dispositif (200) utilisé par l'utilisateur (U) est porté sur une tête de l'utilisateur et fournit un contenu prédéterminé à l'utilisateur (U) ; et
mettre à jour des informations d'environnement (OM01) autour de l'utilisateur (U) en fonction de la région de personne (F) et des informations de distance (DM01), dans lequel l'unité de commande (130) est configurée pour estimer la région de personne (F) en fonction d'un angle formé par une direction de mesure de distance avant (L) du dispositif de mesure de distance et d'une direction de gravité (G).

2. Appareil de traitement d'informations (100) selon la revendication 1, dans lequel
les informations de distance sont une carte de profondeur (DM01), et
lorsqu'un pixel de la carte de profondeur (DM01) est inclus dans la région de personne (F), l'unité de commande (130) est configurée pour attribuer une valeur de fiabilité de région de personne (c) au pixel, qui est une valeur indiquant si les informations de distance sont une distance par rapport à l'utilisateur (U).

3. Appareil de traitement d'informations (100) selon la revendication 2, dans lequel
les informations d'environnement sont une carte quadrillée d'occupation (OM01), et
l'unité de commande (130) est configurée pour mettre à jour l'état d'occupation de chaque quadrillage de la carte quadrillée d'occupation (OM01) selon une valeur correspondant à la valeur de fiabilité de région de personne (c).

4. Appareil de traitement d'informations (100) selon la revendication 2, dans lequel l'unité de commande (130) est configurée pour régler la valeur de fiabilité de région de personne (c) de telle sorte que la valeur de fiabilité de région de personne (c) augmente à mesure qu'une région est plus près de l'utilisateur (U).

5. Appareil de traitement d'informations (100) selon la revendication 1, dans lequel l'unité de commande (130) est configurée pour corriger la région de personne (F) lorsqu'une position assise est détectée en guise de posture d'utilisateur.

6. Appareil de traitement d'informations (100) selon la revendication 1, dans lequel l'unité de commande (130) est configurée pour estimer un bras de l'utilisateur (U) en guise de région de personne (F) selon une position d'un second dispositif (300) saisi par l'utilisateur (U).

7. Appareil de traitement d'informations (100) selon la revendication 1, dans lequel
l'unité de commande (130) est configurée pour mettre à jour les informations d'environnement (OM01) à l'aide d'informations d'environnement de région de personne générées en fonction des informations de distance (DM01) dans la région de personne (F) et d'informations d'environnement périphérique générées en fonction des informations de distance (DM01) dans une région entière.

8. Appareil de traitement d'informations (100) selon la revendication 7, dans lequel
les informations d'environnement (OM01), les informations d'environnement de région de personne et les informations d'environnement périphérique sont des cartes quadrillées d'occupation, et
l'unité de commande (130) est configurée pour mettre à jour les informations d'environnement (OM01) en changeant un état d'occupation vers un état inconnu pour un quadrillage correspondant aux informations d'environnement de région de personne parmi des quadrillages des informations d'environnement périphérique.

9. Appareil de traitement d'informations (100) selon la revendication 1, dans lequel
l'unité de commande (130) est configurée pour corriger la région de personne (F) en fonction d'informations de plan (P, P1, P2) détectées à l'aide des informations de distance (DM01).

10. Procédé de traitement d'informations comprenant :
l'estimation d'une région de personne (F) comportant un utilisateur (U) dans des informations de distance (DM01) générées par un dispositif de mesure de distance fourni dans un dispositif (200) utilisé par l'utilisateur (U), la région de personne (F) étant estimée en fonction d'une posture d'utilisateur estimée à l'aide d'un capteur (220) fourni dans le dispositif (200), dans lequel le dispositif (200) utilisé par l'utilisateur (U) est porté sur une tête de l'utilisateur et fournit un contenu prédéterminé à l'utilisateur (U) ; et
la mise à jour d'informations d'environnement (OM01) autour de l'utilisateur (U) en fonction de la région de personne (F) et des informations de distance (DM01), dans lequel l'estimation de la région de personne (F) est en fonction d'un angle formé par une direction de mesure de distance avant (L) du dispositif de mesure de distance et une direction de gravité (G).

11. Programme informatique comprenant des instructions qui, lorsque le programme est exécuté par un processeur, amènent le processeur à mettre en œuvre les étapes consistant en :
l'estimation d'une région de personne (F) comportant un utilisateur (U) dans des informations de distance (DM01) générées par un dispositif de mesure de distance fourni dans un dispositif (200) utilisé par l'utilisateur (U), la région de personne (F) étant estimée en fonction d'une posture d'utilisateur estimée à l'aide d'un capteur (220) fourni dans le dispositif (200), dans lequel le dispositif (200) utilisé par l'utilisateur (U) est porté sur une tête de l'utilisateur et fournit un contenu prédéterminé à l'utilisateur (U) ; et
la mise à jour d'informations d'environnement (OM01) autour de l'utilisateur (U) en fonction de la région de personne (F) et des informations de distance (DM01), dans lequel l'estimation de la région de personne (F) est en fonction d'un angle formé par une direction de mesure de distance avant (L) du dispositif de mesure de distance et une direction de gravité (G).
